# EUROPÄISCHE PATENTSCHRIFT

(11) **EP 1 308 638 B1**
(45) Veröffentlichungstag und Bekanntmachung des Hinweises auf die Patenterteilung: **29.09.2004**
(21) Anmeldenummer: 02019318.1
(22) Anmeldetag: 29.08.2002
(51) Int. Cl.: F16B 37/00, F16B 39/32, B60B 27/00

(54) **Sicherungsmutter**
Lock nut
Ecrou de blocage

(30) Priorität: 31.10.2001 DE 20117635 U
(43) Veröffentlichungstag der Anmeldung: 07.05.2003
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Winter, Martina Dr.

(56) Entgegenhaltungen:
- DE-A- 19 543 436
- GB-A- 617 597
- US-A- 2 886 089
- US-A- 4 762 452
- US-A- 5 244 326

## Beschreibung

Die vorliegende Erfindung betrifft eine Sicherungsmutter (1) für eine Lagerung, insbesondere eine Radlagerung von Fahrzeugen, wobei die Lagerung eine das Antriebsmoment über eine Keilverzahnung einleitende Gelenkwelle und einen Flansch aufweist, der mit der Gelenkwelle über eine Schraubverbindung axial verspannt ist.

Eine gattungsgemäße Mutter ist aus der DE 195 43 436 C2 bekannt. Diese Druckschrift offenbart eine hülsenartige Gewindemutter, die bei einer Radlagerung zur Sicherung eines Radflansches auf einer Gelenkwelle von Kraftfahrzeugrädern zum Einsatz kommt. Dabei ist die hülsenartige Gewindemutter auf einem an der Gelenkwelle ausgebildeten Gewindezapfen aufgeschraubt und liegt mit ihrem axial federnden Klemmflansch unter Vorspannung am Radflansch an. Der Klemmflansch geht in eine sechskantförmige Vertiefung über, die zum Befestigen der Gewindemutter auf dem Gewindezapfen der Gelenkwelle dient. Am Gewindeteil der Gewindemutter sind am Außenumfang Rastern vorgesehen, die zur Sicherung der Gewindemutter in eine Keilverzahnung eingreift, die zur Übertragung des Antriebsmoments von der Gelenkwelle auf den Radflansch dient. Die Vorspannkraft des Lagers wird allerdings dadurch aufgebracht, dass das innere Ende des am Radflansch vorgesehenen Nabenschaftes radial nach außen zu einem Wulst geformt ist, der sich an den auf den Nabenschaft aufgeschobenen Wälzlagerringen abstützt, wie dies auch in der Patentschrift DE 43 39 847 C1 beschrieben ist. Die gattungsgemäße Mutter dient lediglich als Verliersicherung mit geringer Klemmkraft, so dass die beschriebene Ausführung als Blechteil ausreichend ist.

Die Praxis hat gezeigt, dass die bekannte hülsenförmige Gewindemutter den Anforderungen an die Anklemmkraft infolge der ständigen am Radlager auftretenden Lastwechsel, insbesondere beim Bremsen und Beschleunigen des Fahrzeugs in Kurven, nicht standhält. Die Anklemmkraft lässt bei dieser als Tiefziehblechteil hergestellten Gewindemutter in erheblichem Umfang nach, was aus Sicherheitsgründen nicht akzeptierbar ist. Darüber hinaus kann aufgrund der flexiblen Ausführung des Klemmflansches der hülsenförmigen Gewindemutter ein Eindringen von Feuchtigkeit in den Bereich der Keilverzahnung nicht zuverlässig ausgeschlossen werden. Eine mögliche Korrodierung der Keilverzahnung ist damit gegeben, womit eine zuverlässige Übertragung des Antriebsmoments nicht mehr gewährleistet ist.

Die Werkzeugkosten und die Produktionskosten sind bei der als Tiefziehbauteile hergestellten hülsenförmigen Gewindemutter erheblich.

Die Aufgabe der vorliegenden Erfindung besteht nun darin, eine Sicherungsmutter bereitzustellen, die hohen Belastungen, bspw. den hohen Anforderungen beim Betrieb eines Fahrzeugs, auf Dauer standhält, und die ein Eindringen von Feuchtigkeit in das Innere des Lagers zuverlässig verhindert. Außerdem soll die Sicherungsmutter einfach aufgebaut und wirtschaftlich herstellbar sein.

Die Lösung besteht in einer Sicherungsmutter mit den Merkmalen des Patentanspruchs 1. Die erfindungsgemäße Sicherungsmutter zeichnet sich dadurch aus, dass sie aus einem massiven Mutterkörper besteht, der einen Bund aufweist, von dem sich axial ein Halsansatz erstreckt, der an seiner Stirnfläche mit einem ringförmigen Steg versehen ist, aus dem sich mindestens zwei Krallen radial erstrecken.

Diese erfindungsgemäße Ausbildung bewirkt, dass infolge der hohen Festigkeit des Mutterkörpers die Sicherungsmutter wesentlich fester angezogen werden kann, wodurch sich die Anklemmkraft erheblich erhöht. Das bedeutet, die axiale Verspannung zwischen der Gelenkwelle und dem Flansch ist so groß, dass die Lagerung auch bei großer Belastung, bspw. bei rauem Fahrbetrieb im Falle einer Radlagerung auf Dauer zuverlässig arbeitet und keine Lose entsteht. Darüber hinaus wird die Konstruktion so fest zusammen gepresst, dass das Eindringen von Feuchtigkeit in die Keilverzahnung vermieden wird. Infolge des einfachen Aufbaus der erfindungsgemäßen Sicherungsmutter ist dieselbe kostengünstig herzustellen. Die erfindungsgemäße Ausführung ermöglicht auch, dass mit ihr ggf. die benötigte Lagervorspannkraft zur axialen Verspannung zwischen Gelenkwelle und Flansch aufgebracht und gehalten werden kann, falls die Lagerkonstruktion dies erfordert. Eine wirtschaftliche Fertigung wird insbesondere dadurch erzielt, indem der Mutterkörper ein Warmoder Kaltpressteil ist.

Im einzelnen ist die erfindungsgemäße Sicherungsmutter so ausgebildet, dass der Bund im Verhältnis zum Halsansatz einen wesentlich größeren Außendurchmesser aufweist, der vorzugsweise im Verhältnis 2 : 1 steht. Außerdem ist der Bund auf seiner Mantelfläche mit einer Verzahnung für den Eingriff eines Montagewerkzeugs versehen. Diese Verzahnung kann sechskantförmig oder vorzugsweise zwölfkantförmig ausgebildet sein. Damit kann mittels eines Montagewerkzeugs ein hohes Drehmoment auf die Sicherungsmutter ausgeübt werden, was einen festen Sitz derselben auf der Gelenkwelle zur Folge hat. Zugleich wird eine zuverlässige Verspannung der Gelenkwelle und des Flansches sowie des auf der mit dem Flansch verbundenen Nabe sitzenden Wälzlagers erreicht. Das Wälzlager ist mit einem Federbein mittels Schrauben verbunden.

Zum Aufschrauben auf einen an der Gelenkwelle ausgebildeten Gewindezapfen ist die Sicherungsmutter mit einer zentralen Gewindebohrung versehen.

Zur Vereinfachung des Aufbaus des Mutterkörpers und damit zur Erzielung einer wirtschaftlichen Herstellung derselben sind der Außendurchmesser des zylinderförmigen Halsansatzes und der Außendurchmesser des ringförmigen Stegs gleich groß bemessen. Dabei sind die Krallen als sich tangential vom ringförmigen Steg wegerstreckende Lappen ausgebildet.

Die vorliegende Erfindung stellt also eine einfach und kostengünstig herstellbare Sicherungsmutter zur Verfügung, die mit optimaler Kraft verschraubt und verklemmt werden kann und die zuverlässig gegen Lockern und Verlust gesichert ist. Außerdem ist die erfindungsgemäße Sicherungsmutter auch für offene Lager einsetzbar, d. h. sie ist auch zum Aufziehen eines Lagers geeignet. Vorteilhafterweise kann die gesamte Lagervorspannkraft, die je nach der Dimensionierung 60 bis 100 Kilo-Newton beträgt, von der Sicherungsmutter aufgenommen werden. Damit ist die erfindungsgemäße Sicherungsmutter für einen großen Anwendungsbereich verwendbar.

Ein Ausführungsbeispiel der vorliegenden Erfindung wird im Folgenden anhand der beigefügten Zeichnung näher erläutert. Es zeigen
- Figur 1: eine schematische, nicht maßstabsgerechte Darstellung der erfindungsgemäßen Sicherungsmutter in Draufsicht und
- Figur 2: eine schematische, nicht maßstabsgerechte Darstellung der Sicherungsmutter aus Figur 1 im Schnitt.

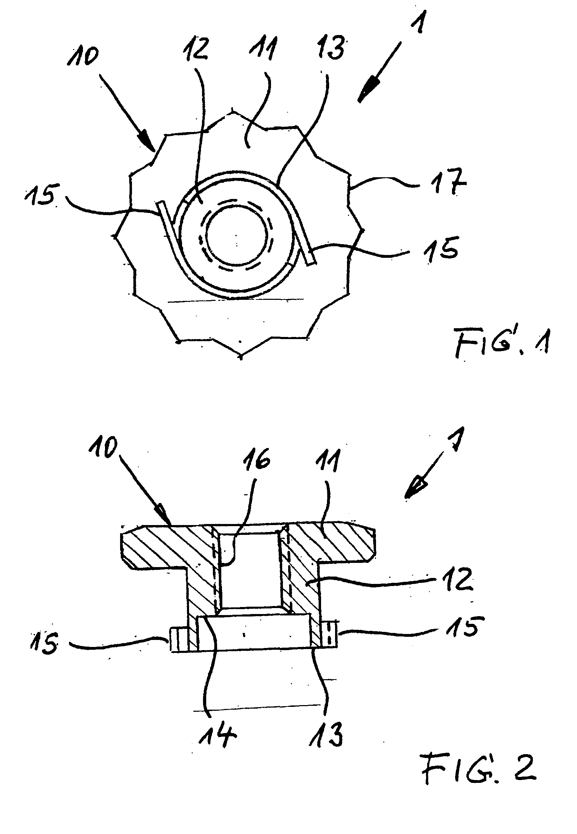

Ein Ausführungsbeispiel einer erfindungsgemäßen Sicherungsmutter ist in den Figuren 1 und 2 schematisch dargestellt. Die Sicherungsmutter 1 besteht aus einem Mutterkörper 10, der einen großflächigen Bund 11 aufweist. Von dem Bund 11 erstreckt sich ein Halsansatz 12 in axialer Richtung. Auf der Stirnfläche 14 des Halsansatzes 12 ist ein ringförmiger Steg 13 angeformt, der sich ebenfalls in axialer Richtung erstreckt.

Im dargestellten Ausführungsbeispiel der Sicherungsmutter 1 sind der Außendurchmesser des Halsansatzes 12 und der Außendurchmesser des ringförmigen Stegs 13 gleich groß bemessen. Aus dem ringförmigen Steg 13 sind zwei sich gegenüberliegende Krallen 15 ausgestanzt und radial nach außen abgebogen.

Diese Krallen 15 greifen zur Sicherung der Sicherungsmutter 1 in die zwischen dem Flansch und der Gelenkwelle ausgebildete Keilverzahnung ein. Im Ausführungsbeispiel sind die Krallen 15 als sich tangential vom ringförmigen Steg 13 wegerstreckende Lappen ausgebildet. Für die Krallen 15 ist auch jede andere geeignete Ausbildungsform und Anordnung denkbar.

Zur Verschraubung und Erzielung einer optimalen Anklemmkraft ist die Mantelfläche des Bunds 11 mit einer Verzahnung 17 versehen in die ein Montagewerkzeug eingreifen kann. Die Verzahnung 17 kann als Sechskant oder wie im Ausführungsbeispiel als Zwölfkant ausgebildet sein.

Mit der erfindungsgemäßen Sicherheitsmutter 1 ist eine zuverlässige und betriebssichere Befestigung eines Flansches auf einer Gelenkwelle, bspw. eines Radflansches, wie es in der Patentschrift DE 195 43 436 C2 beschrieben ist, unter kostengünstigen Bedingungen möglich. Zugleich wird mit der erfindungsgemäßen Sicherheitsmutter 1 Feuchtigkeit aus dem Innern des Lagers ferngehalten. Mit der erfindungsgemäßen Sicherungsmutter kann ferner ggf. die benötigte Lagervorspannkraft aufgebracht und gehalten werden, falls die Lagerkonstruktion dies im Einzelfall erforderlich macht.

## Patentansprüche

1. Sicherungsmutter (1) für eine Lagerung, insbesondere eine Radlagerung von Fahrzeugen, wobei die Lagerung eine das Antriebsmoment über eine Keilverzahnung einleitende Gelenkwelle und einen Flansch aufweist, der mit der Gelenkwelle über eine Schraubverbindung axial verspannt ist, **dadurch gekennzeichnet, dass** die Sicherungsmutter (1) aus einem massiven Mutterkörper (10) besteht, der einen Bund (11) aufweist, von dem sich axial ein Halsansatz (12) erstreckt, der an seiner Stirnfläche (14) mit einem ringförmigen Steg (13) versehen ist, aus dem sich mindestens zwei Krallen (15) radial erstrecken.

2. Sicherungsmutter nach Anspruch 1, **dadurch gekennzeichnet, dass** der Mutterkörper (10) ein Warm- oder Kaltpressteil ist.

3. Sicherungsmutter nach Anspruch 1, **dadurch gekennzeichnet, dass** der Bund (11) im Verhältnis zum Halsansatz (12) einen wesentlich größeren Außendurchmesser aufweist, der vorzugsweise im Verhältnis 2 : 1 steht.

4. Sicherungsmutter nach den Ansprüchen 1 bis 3, **dadurch gekennzeichnet, dass** der Mutterkörper (10) mit einer zentralen Gewindebohrung (16) versehen ist.

5. Sicherungsmutter nach den Ansprüchen 1 bis 4, **dadurch gekennzeichnet, dass** der Außendurchmesser des zylinderförmigen Halsansatzes (12) und der Außendurchmesser des ringförmigen Stegs (13) gleich groß bemessen sind.

6. Sicherungsmutter nach den Ansprüchen 1 bis 5, **dadurch gekennzeichnet, dass** die Krallen (15) als sich tangential vom ringförmigen Steg (13) wegerstreckende Lappen ausgebildet sind.

7. Sicherungsmutter nach den Ansprüchen 1 bis 6, **dadurch gekennzeichnet, dass** der Bund (11) auf seiner Mantelfläche mit einer Verzahnung (17) für den Eingriff eines Montagewerkzeugs versehen ist.

8. Sicherungsmutter nach Anspruch 7, **dadurch gekennzeichnet, dass** die Verzahnung (17) sechskantförmig oder vorzugsweise zwölfkantförmig ausgebildet ist.

## Claims

1. A lock nut (1) for a bearing, especially a wheel bearing of vehicles, wherein the bearing has a universal shaft, introducing the torque via a splining, and a flange, which is axially secured to the universal shaft by a screw connection, **characterized in that** the lock nut (1) consists of a solid nut body (10), having a flange (11), from which extends axially a neck projection (12), being provided with an annular shroud (13) at its end surface (14), from which at least two claws (15) extend radially.

2. A lock nut according to claim 1, further **characterized in that** the nut body (10) is a hot or cold pressed part.

3. A lock nut according to claim 1, further **characterized in that** the flange (11) has a much larger outer diameter in relation to the neck projection (12), preferably in the ratio of 2 : 1.

4. A lock nut according to claims 1 to 3, further **characterized in that** the nut body (10) is provided with a central threaded borehole (16).

5. A lock nut according to claims 1 to 4, further **characterized in that** the outer diameter of the cylindrical neck projection (12) and the outer diameter of the annular shroud (13) are of equal dimension.

6. A lock nut according to claims 1 to 5, further **characterized in that** the claws (15) are fashioned as lobes extending tangentially from the annular shroud (13).

7. A lock nut according to claims 1 to 6, further **characterized in that** the flange (11) on its lateral surface is provided with a toothing (17) for engaging with an installation tool.

8. A lock nut according to claim 7, further **characterized in that** the toothing (17) is of hexagonal or preferably twelve-point configuration.

## Revendications

1. Ecrou de fixation (1) pour un palier, en particulier le palier d'une roue de véhicule, le palier présentant un arbre de transmission à cardan qui transmet le couple d'entraînement par l'intermédiaire d'une denture en biseau ainsi qu'une bride qui est serrée axialement sur l'arbre de transmission à cardan par l'intermédiaire d'une liaison vissée, **caractérisé en ce que** l'écrou de fixation (1) est constitué d'un corps massif d'écrou (10) qui présente un épaulement (11) prolongé axialement par un appendice (12) qui est doté sur sa surface frontale (14) d'une aile (13) de forme annulaire de laquelle au moins deux griffes (15) débordent radialement.

2. Ecrou de fixation selon la revendication 1, **caractérisé en ce que** le corps d'écrou (10) est une pièce fabriquée à la presse à chaud ou à froid.

3. Ecrou de fixation selon la revendication 1, **caractérisé en ce que** l'épaulement (11) présente un diamètre extérieur beaucoup plus grand que celui de l'appendice (12), de préférence dans le rapport 2 : 1.

4. Ecrou de fixation selon les revendications 1 à 3, **caractérisé en ce que** le corps d'écrou (10) est doté en son centre d'un alésage fileté (16).

5. Ecrou de fixation selon les revendications 1 à 4, **caractérisé en ce que** le diamètre extérieur de l'appendice (12) cylindrique et le diamètre extérieur de l'aile (13) de forme annulaire sont identiques.

6. Ecrou de fixation selon les revendications 1 à 5, **caractérisé en ce que** les griffes (15) sont configurées comme pattes qui s'éloignent tangentiellement de l'aile (13) de forme annulaire.

7. Ecrou de fixation selon les revendications 1 à 6, **caractérisé en ce que** l'épaulement (11) est doté sur sa surface d'enveloppe d'une denture (17) qui permet d'engager un outil de montage.

8. Ecrou de fixation selon la revendication 7, **caractérisé en ce que** la denture (17) présente une configuration hexagonale ou de préférence dodécagonale.
